# EUROPÄISCHE PATENTSCHRIFT

(11) **EP 1 151 524 B1**
(45) Veröffentlichungstag und Bekanntmachung des Hinweises auf die Patenterteilung: **14.08.2002**
(21) Anmeldenummer: 99963157.5
(22) Anmeldetag: 16.12.1999
(51) Int. Cl.: H02M 3/335

(54) **SCHALTNETZTEIL**
SWITCHED MODE POWER SUPPLY
ALIMENTATION A DECOUPAGE

(30) Priorität: 16.12.1998 AT 210298
(43) Veröffentlichungstag der Anmeldung: 07.11.2001
(73) Patentinhaber: Siemens AG Österreich, 1210 Wien (AT)
(72) Erfinder: ECKL, Gerald, A-2123 Schleinbach (AT); APPEL, Wilhelm, A-2136 Laa a. d. Thaya (AT)
(74) Vertreter: Matschnig, Franz, Dipl.-Ing.
(86) Internationale Anmeldenummer: AT9900305
(87) Internationale Veröffentlichungsnummer: WO0036738

(56) Entgegenhaltungen:
- EP-A- 0 466 627
- US-A- 4 251 847
- US-A- 5 060 131
- US-A- 5 790 390

## Beschreibung

Die Erfindung bezieht sich auf ein Schaltnetzteil mit einem Übertrager, der eine Primärwicklung, eine Hilfswicklung und zumindest eine Sekundärwicklung aufweist, wobei die Primärwicklung in Serie mit einem Schalttransistor an einer Eingangsgleichspannung liegt und der Sekundärwicklung ein Gleichrichter und ein Ladekondensator nachgeschaltet sind, mit einer Ansteuerschaltung, für deren Stromversorgung ein der Hilfswicklung nachgeschalteter Hilfsgleichrichter und ein Kondensator vorgesehen sind, und welche für den Schalter Startimpulse fester Frequenz liefert, mit einem Stromfühler für den Strom durch die Primärwicklung, mit zumindest einem Regelverstärker zum Vergleich von Ausgangsspannung und/oder Ausgangsstrom mit einem einstellbaren Referenzwert, wobei als Stellsignal für die Ansteuerschaltung das Ausgangssignal des zumindest einen Regelverstärkers, sowie das Ausgangssignal des Stromfühlers zur Beeinflussung des Tastverhältnisses des Schalters zugeführt sind.

Schaltwandler dieser Art sind als Stromversorgungsgeräte in einer großen Anzahl von Ausführungen, als Sperr- oder Flusswandler bekannt geworden und werden in hohen Stückzahlen zur Stromversorgung elektrischer und elektronischer Geräte eingesetzt. Dazu kann beispielsweise auf: Hirschmann/Hauenstein, "Schaltnetzteile", Verlag Siemens 1990, Thiel, "Professionelle Schaltnetzteilapplikationen", Franzis Verlag 1996 oder Kilgenstein, "Schaltnetzteile in der Praxis", Vogel-Fachbuch 1988 verwiesen werden.

Die Ansteuerschaltung wird in der Regel zum Großteil in einem IC-Baustein realisiert. Obwohl derartige Bausteine bei großen Serien kostengünstig sind, hat die Praxis gezeigt, dass IC-Ansteuerbausteine doch die Kosten eines Schaltnetzteils ungünstig beeinflussen, zumal sie letztlich doch zahlreiche periphere Schaltelemente benötigen. Dazu kommen eine hohe Störempfindlichkeit der IC-Bausteine sowie ein meist eingeschränkter Bereich der möglichen Versorgungsspannungen solcher Ansteuerbausteine.

Bei einem aus der EP 0 509 343 A2 bekannt gewordenen Schaltregler besitzt der Übertrager neben einer Primär- und Sekundärwicklung noch eine Abmagnetisierungswicklung und zur Ansteuerung des Schalttransistors ist ein astabiler Multivibrator vorgesehen, der als Schwellwertkomparator mit einem Ladekondensator als frequenzbestimmendes Element ausgebildet ist. Die Dauer der Einschaltimpulse des Schalttransistors wird bei diesem Schaltregler von der Höhe der Eingangsgleichspannung, die Wiederholfrequenz von der Höhe der Ausgangsspannung bestimmt.

Eine Aufgabe der Erfindung liegt darin, in Abkehr von dem Trend zu sehr komplexen integrierten Schaltungen eine einfache Schaltung mit diskreten Bauelementen zu schaffen, die eine kostengünstige Ansteuerung des Schalttransistors eines Schaltnetzteils ermöglichen. Dabei soll die Zahl der benötigen Schaltelemente minimal sein.

Diese Aufgabe wird, ausgehend von einem Schaltnetzteil der eingangs genannten Art erfindungsgemäß dadurch gelöst, dass die Ansteuerschaltung einem festfrequenten, astabilen Multivibrator besitzt, ein Ausgangssignal des Multivibrators über eine Trennstufe dem Eingang einer gesteuerten Stromquelle zugeführt ist, und der Ausgang der Stromquelle mit der Steuerelektrode eines Schalttransistors im Primärstromkreis verbunden ist, um den Schalttransistor mit einer ersten Flanke des Multivibratorausgangssignals einzuschalten, die Steuerelektrode des Schalttransistors über einen gesteuerten Thyristor auf ein Abschaltpotential legbar ist, wobei dem Thyristor als Steuersignal einerseits das Stellsignal und andererseits das Ausgangssignal des Stromfühlers zugeführt ist, und dem Thyristor als Löschimpulse jeweils die zweiten Flanken des Multivibratorausgangssignals zugeführt sind.

Dank der Erfindung wird ein Schaltnetzteil geschaffen, der sowohl für Sperr- als auch für Flußwandler einsetzbar ist und der neben billigem Aufbau auch unkritisch hinsichtlich der Betriebsspannung seiner Schaltelemente und außerdem sehr störfest ist.

Im Sinne einer einfachen Begrenzung des maximalen Tastverhältnisses ist es zweckmäßig, wenn der Multivibrator asymmetrisch aufgebaut ist.

Es ist auch günstig, wenn der Multivibrator zwei Transistoren aufweist, wobei der Emitter eines der Transistoren mit der Basis einer die Trennstufe bildenden Transistors verbunden ist, wobei der Löschvorgang entkoppelt von dem Multivibrator an den Thyristor vorgegeben wird.

Bei einer besonders vorteilhaften Variante ist der Thyristor aus einem npn-pnp-Transistorpaar gebildet. Diese Lösung ist sehr kostengünstig und ermöglicht einen wesentlich geringeren Haltestrom als ein üblicher Einzelthyristor. Dabei ergibt sich eine praxisbewährte Ansteuerung des nachgebildeten Thyristors, wenn das Stellsignal, sowie das Ausgangssignal des Stromfühlers dem Emitter eines Transistors des Paares zugeführt ist, welcher über einen Widerstand mit der Basis des zweiten Transistors dieses Paares verbunden ist.

Bei einer besonders einfachen Lösung für die Stromquelle und die Ansteuerung des Schalttransistors ist vorgesehen, dass die gesteuerte Stromquelle von einem Transistor gebildet ist, über dessen Kollektor-Emitter-Strecke der Steuerelektrode des Schalttransistors ein Schaltstrom zuführbar ist, sowie von einer die Basis-Emitter-Strecke des Transistors überbrückenden Diode. Gleichfalls im Sinne einer Reduzierung der Bauteile ist es hierbei empfehlenswert, wenn die Basis des Transistors der gesteuerten Stromquelle mit dem Emitter (Kollektor) eines Transistors des Transistorpaares verbunden ist.

Falls der Hilfswicklung eine Gleichrichterdiode und mit dieser in Serie ein zu einem Ladekondensator führender Vorwiderstand nachgeschaltet ist, wobei die Spannung an dem Verbindungspunkt von Gleichrichterdiode und Vorwiderstand die Versorgungsspannung des Multivibrators bildet, kann auf einfache Weise ein sicheres Anschwingen des Multivibrators sichergestellt werden.

Wenn die Ausgangsspannung der Trennstufe durch eine (Zener)diode begrenzt ist, ergibt sich neben der Begrenzung der Gatespannung des Schalttransistors eine Vorgabe des Stromsollwertes für die Gate-Ansteuerstromquelle.

Die Erfindung samt weiterer Vorteile ist im folgenden anhand einer beispielsweisen Ausführungsform näher erläutert, die unter Zuhilfenahme der Zeichnung veranschaulicht ist. In dieser zeigen
- Fig. 1: eine mögliche Schaltung eines Schaltnetzteils nach der Erfindung, zum Teil vereinfacht dargestellt und
- Fig. 2: den Signalverlauf an drei ausgewählten Punkten der Schaltung nach Fig. 1.

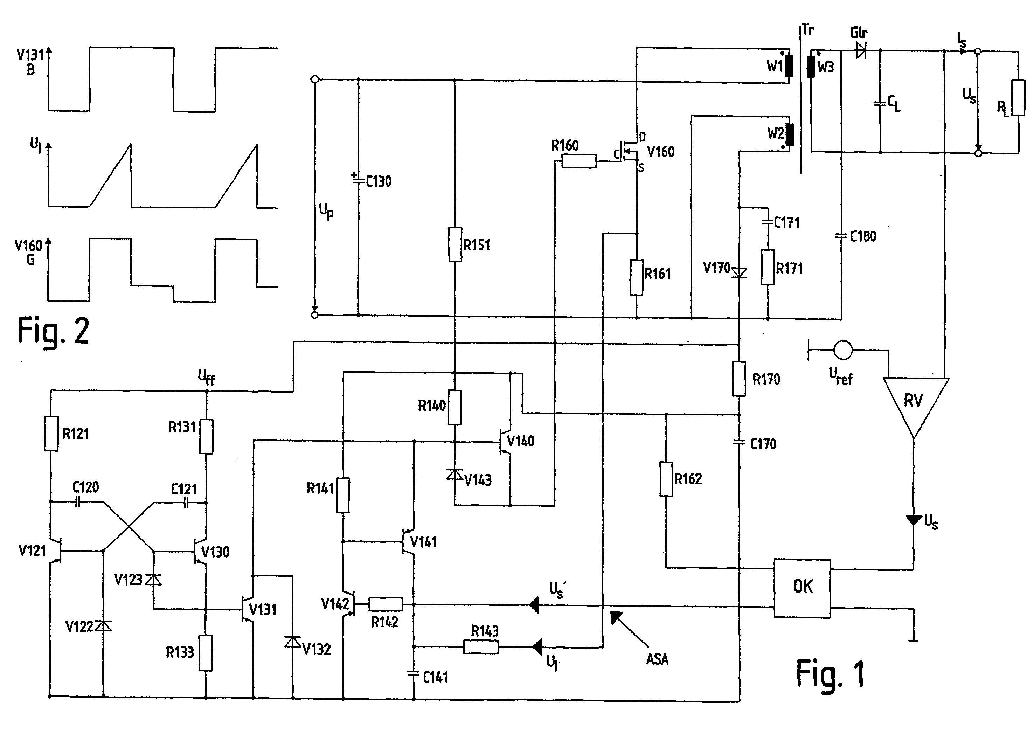

Wie Fig. 1 entnehmbar, besitzt ein Schaltnetzteil nach der Erfindung einen Übertrager Tr mit einer Primärwicklung W1, einer Hilfswicklung W2 und einer Sekundärwicklung W3. Die Primärwicklung W1 liegt in Serie mit einem Schalttransistor V160, hier einem Feldeffekttransistor und einem Stromfühler R161 - einem niederohmigen Widerstand an einer Eingangsgleichspannung Uₚ und einem Kondensator C130. Die Eingangsgleichspannung Uₚ wird meist eine Zwischenkreisspannung sein, die durch Gleichrichtung einer Netzspannung gewonnen wird.

Die Spannung der Sekundärwicklung W3 wird mit Hilfe eines Gleichrichters Glr, hier eine einzelne Diode, und eines Ladekondensators C_{L} in eine Ausgangsgleichspannung U_{S} gewandelt, wobei über eine angeschlossene Last R_{L} ein Ausgangsstrom Is fließt. Zur Regelung kann beispielsweise die Ausgangsspannung U_{S} in einem Regelverstärker R_{V} mit einer Referenzspannung U_{Ref} verglichen werden, und ein Stellsignal U_{S} wird in bekannter Weise über einen Optokoppler OK als Stellsignal U_{S} einer weiter unten näher beschriebenen Ansteuerschaltung ASA zugeführt. Der nicht gezeigte Phototransistor des Optokopplers OK liegt über einem Widerstand R162 an der weiter unten beschriebenen Versorgungsspannung der Ansteuerschaltung.

Der Hilfswicklung W2 ist ein Hilfsgleichrichter nachgeschaltet - hier eine Gleichrichterdiode V170 - die über einen Vorwiderstand R170 an einem Ladekondensator C170 liegt, um die Stromversorgung für die Ansteuerschaltung ASA bereitzustellen. Ein Serien-R-C-Glied R171, C171, das parallel zur Hilfswicklung W2 liegt, dient ebenso wie ein Kondensator C180, der von der Sekundärwicklung W3 gegen primäre Masse geführt ist, zur Entstörung.

Die Ansteuerschaltung ASA besitzt einen festfrequenten astabilen Multivibrator, der von zwei npn-Transistoren V121, V130 mit Kollektorwiderständen R121, R131 und Übertragungskondensatoren C120 bzw. C121 gebildet ist. Zwischen Basis und Emitter beider Transistoren V121, V130 des astabilen Multivibrators liegen Schutzdioden V122, V123 und ein Transistor V130 besitzt einen Emitter-Widerstand R133, welcher einerseits dem Multivibrator eine gewünschte Asymmetrie verleiht und der andererseits die Ankopplung an die Basis eines eine Trennstufe bildenden Transistors V131 ermöglicht. Der Kollektor-Emitter-Strecke dieses Transistors ist ein Zenerdiode V132 parallelgeschaltet, deren Funktion weiter unten erläutert wird.

Die Erfindung verwendet zur Ansteuerung des Schalttransistors V160 einen Thyristor, der jedoch bevorzugt durch ein pnp-npn-Transistorpaar V141, V142 realisiert wird. Bei dem Ausführungsbeispiel liegt zwischen der Basis des npn-Transistors V142 und dem Kollektor des pnp-Transistors V141 ein Widerstand R142 der Größenordnung 100 Ohm.

Der Kollektor des pnp-Transistors V 141 ist der Einspeisungspunkt für zwei Signale, nämlich einerseits für das Ausgangssignal Uₗ des Stromfühlers R161, das über einen Widerstand R143 der Größenordnung 2 kOhm zugeführt wird, und andererseits für das vom Optokoppler OK einlangende Stellsignal U_{S'}. Von dem genannten Einspeisungspunkt gegen Masse ist ein Kondensator C141 der Größenordnung 1 nF geschaltet, der die Flankensteilheit begrenzt.

Der Kollektor der npn-Transistors V142 liegt über einen Widerstand R141 an der Versorgungsspannung, d. h. an dem positiven Anschluss des Ladekondensators C170, wogegen der Emitter des pnp-Transistors V141 mit der Basis einen npn-Transistors V140 verbunden ist. Der Widerstand R141 stabilisiert den Thyristor, er bestimmt den "Gate-Triggerstrom", bei dem der Thyristor zündet. Dadurch wird die Ansteuerschaltung weniger störempfindlich. Die Basis-Emitter-Strecke dieses Transistors V140 ist von einer Diode V143 überbrückt, die Basis liegt über einem Widerstand R140 an der Versorgungsspannung. Der Transistor V142 ist somit als gesteuerte Stromquelle geschaltet, wobei über seine Kollektor-Emitter-Strecke dem Gate des Schalttransistors V160 dessen Schaltstrom zugeführt wird. Ein niederohmiger Schutzwiderstand R160 liegt dabei zwischen dem Gate des Schalttransistors V160 und der genannten Stromquelle.

Die Funktion des hier als Sperrwandler ausgebildeten Schaltnetzteils nach der Erfindung sei nachstehend kurz erläutert.

Der Multivibrator V121/V130 arbeitet beispielsweise bei einer Frequenz von 50 kHz mit einem Tastverhältnis von ca. 50 %, wodurch auch das maximale Tastverhältnis der Ansteuerung des Schalttransistors V160 festgelegt ist. Der leicht asymmetrische Aufbau und die beabsichtigt nicht gut gesiebte Versorgungsspannung U_{FF} erleichtern das Anschwingen des Multivibrators. Außerdem ist an dem Emitterwiderstand R133 ein rückwirkungsfreies Auskoppeln der Taktimpulse möglich. Die Diode V123 ermöglicht ein besonders schnelles Abschalten des Trenntransistors V131 und sie schützt die Basis-Emitter-Strecke des Transistors V130 vor zu hoher Spannung.

Die Zenerdiode V132 begrenzt die maximale Gatespannung und gibt in Verbindung mit dem Entkopplungstransistor V131 den Stromsollwert für die Stromquelle R140, V143, V140 vor. Durch die Gateansteuerung am Schalttransistor V160 wird in der Primärwicklung W1 des Übertragers Tr ein Stromfluss erzeugt, der durch den Stromfühler R161 in einem äquivalenten Spannungswert Uₗ umgewandelt wird. Dieser Spannungswert wird in dem gesteuerten Thyristor V142 + V141 mit der von dem Optokoppler OK gelieferten Stellgröße U_{S}, verglichen.

Überschreitet der Strom-Ist-Wert die Stellgröße, so zündet der Thyristor und leitet so den von der Stromquelle erzeugten Strom, sowie den Gate-Entladungsstrom gegen Masse ab, was eine schnelle Entladung des Gates und damit ein rasches Ausschalten des Schalttransistors V160 bewirkt. Nun wird in bekannter Weise Energie in den Sekundärkreis - Sekundärwicklung W3 etc. - sowie in den Hilfsversorgungskreis - W2, V170, C170 - übertragen. Der Multivibrator V121, V130 gibt über die Trennstufe V131 den Löschvorgang wieder an den Thyristor V142-V141 vor.

Solange der astabile Multivibrator noch nicht arbeitet, sperren dessen beide Transistoren V121, V130. Hier wird durch einen Anlaufwiderstand R151, der einerseits an der Primärspannung U_{P} und andererseits an dem Kollektor des Stromquellen-Transistors V140 liegt, ein erstmaliges Hochladen des Gates des Schalttransistors V160 erreicht und der Primärstrom beginnt zu fließen. Übersteigt das Spannungsabbild - U_{I} die Flussspannung des Transistors V142, so zündet der Thyristor V142 + V141. Die damit einsetzende Energieübertragung erzeugt über die Hilfswicklung W2 eine Spannungsspitze am Vorwiderstand R170 für den Ladekondensator C170 der Hilfsversorgung. Da die Spannungsversorgung des Multivibrators von dieser, bei jedem übertragenen Energiepuls stark gestörten Spannung erfolgt, erfolgt ein sicheres und stabiles Anschwingen.

Fig. 2 zeigt in einem Diagramm ganz oben die Spannung an der Basis des Multivibrator-Transistors V131 - ein Rechtecksignal mit einem bestimmten Tastverhältnis, darunter das dem Primärstrom entsprechende Signal U_{I} und ganz unten die Spannung am Gate des Schalttransistors V160, wobei der stufenweise Spannungsverlauf am Gate ersichtlich ist, mit einer während jeder Periode nach dem Abschalten des Primärstromes noch verbleibenden Restspannung. Dies ist eine Folge des Umstandes, dass dem Thyristor V 142 + 141 als Löschimpulse jeweils die zweiten Flanken des Multivibratorausgangssignals zugeführt sind.

## Patentansprüche

1. Schaltnetzteil mit einem Übertrager (T180), der eine Primärwicklung (W1), eine Hilfswicklung (W2) und zumindest eine Sekundärwicklung (W3) aufweist, wobei die Primärwicklung in Serie mit einem Schalttransistor (V160) an einer Eingangsgleichspannung (Uₚ) liegt und der Sekundärwicklung ein Gleichrichter (Glᵣ) und ein Ladekondensator (C_{L}) nachgeschaltet sind,
mit einer Ansteuerschaltung (ASA), für deren Stromversorgung ein der Hilfswicklung nachgeschalteter Hilfsgleichrichter (V170) und ein Kondensator (C170) vorgesehen sind, und welche für den Schalter Startimpulse fester Frequenz liefert, mit einem Stromfühler (R161) für den Strom durch die Primärwicklung (W1), mit zumindest einem Regelverstärker (RV) zum Vergleich von Ausgangsspannung (U_{S}) und/oder Ausgangsstrom (I_{S}) mit einem einstellbaren Referenzwert (U_{ref}), wobei als Stellsignal (U_{S}) für die Ansteuerschaltung das Ausgangssignal des zumindest einen Regelverstärkers (RV), sowie das Ausgangssignal (Uₗ) des Stromfühlers zur Beeinflussung des Tastverhältnisses des Schalters zugeführt sind,
**dadurch gekennzeichnet, dass**
die Ansteuerschaltung (ASA) einen festfrequenten, astabilen Multivibrator (V121, V130) besitzt, ein Ausgangssignal des Multivibrators über eine Trennstufe (V131) dem Eingang einer gesteuerten Stromquelle (V140, V143, R140) zugeführt ist, und der Ausgang der Stromquelle mit der Steuerelektrode des Schalttransistors (V160) im Primärstromkreis verbunden ist, um den Schalttransistor (V160) mit einer ersten Flanke des Multivibratorausgangssignales einzuschalten,
die Steuerelektrode des Schalttransistors über einen gesteuerten Thyristor (V142, V141) auf ein Abschaltpotential legbar ist, wobei dem Thyristor als Steuersignal einerseits das Stellsignal (U_{S},) und andererseits das Ausgangssignal (Uₗ) des Stromfühlers (R161) zugeführt ist, und dem Thyristor als Löschimpulse jeweils die zweiten Flanken des Multivibratorausgangssignals zugeführt sind.

2. Schaltnetzteil nach Anspruch 1, **dadurch gekennzeichnet, dass** der Multivibrator (V121, V130) asymmetrisch aufgebaut ist.

3. Schaltnetzteil nach einem der Ansprüche 1 oder 2, **dadurch gekennzeichnet, dass** der Multivibrator zwei Transistoren (V121, V130) aufweist, wobei der Emitter eines der Transistoren (V130) mit der Basis einer die Trennstufe bildenden Transistors (V131) verbunden ist.

4. Schaltnetzteil nach einem der Ansprüche 1 bis 3, **dadurch gekennzeichnet, dass** der Thyristor aus einem npn-pnp-Transistorpaar (V142, V141) gebildet ist.

5. Schaltnetzteil nach Anspruch 4, **dadurch gekennzeichnet, dass** das Stellsignal (U_{s'}), sowie das Ausgangssignal des Stromfühlers (R161) dem Emitter eines Transistors (V141) des Paares (V142, V141) zugeführt ist, welcher über einen Widerstand (R 142) mit der Basis des zweiten Transistors (V142) dieses Paares verbunden ist.

6. Schaltnetzteil nach einem der Ansprüche 1 bis 5, **dadurch gekennzeichnet, dass** die gesteuerte Stromquelle von einem Transistor (V140) gebildet ist, über dessen Kollektor-Emitter-Strecke der Steuerelektrode des Schalttransistors (V160) ein Schaltstrom zuführbar ist, sowie von einer die Basis-Emitter-Strecke des Transistors überbrückenden Diode (V143).

7. Schaltnetzteil nach einem der Ansprüche 4 oder 5 und Anspruch 6, **dadurch gekennzeichnet, dass** die Basis des Transistors (V140) der gesteuerten Stromquelle mit dem Emitter (Kollektor) eines Transistors (V141) des Transistorpaares (V142, V141) verbunden ist.

8. Schaltnetzteil nach einem der Ansprüche 1 bis 7, **dadurch gekennzeichnet, dass** der Hilfswicklung (W2) eine Gleichrichterdiode (V170) und mit dieser in Serie ein zu einem Ladekondensator (C170) führender Vorwiderstand (R170) nachgeschaltet ist, wobei die Spannung an dem Verbindungspunkt von Gleichrichterdiode und Vorwiderstand die Versorgungsspannung (UFF) des Multivibrators (V121, V130) bildet.

9. Schaltnetzteil nach einem der Ansprüche 1 bis 8, **dadurch gekennzeichnet, dass** die Ausgangsspannung der Trennstufe (V131) durch eine (Zener)diode (V132) begrenzt ist.

## Claims

1. Switched mode mains power supply having a transformer (T180) which has a primary winding(W1), an auxiliary winding (W2) and at least one secondary winding (W3), wherein, in series with a switching transistor (V160), the primary winding is connected to an input direct voltage (U_{P}), and a rectifier (Qlᵣ)and a filter capacitor (C_{L}) are connected downstream of the secondary winding,
having an actuation circuit (ASA), for the power supply of which are provided an auxiliary rectifier (V170) connected downstream of the auxiliary winding and a capacitor (C170), and which supplies starting pulses of a fixed frequency for the switch, having a current sensor (R161) for the current through the primary winding (W1), having at least one regulating amplifier (RV) for comparison of output voltage (U_{S}) and/or output current (I_{S}) with an adjustable reference value U_{Ref}), wherein as the setting signal (U_{S}) for the actuation circuit the output signal of the at least one regulating amplifier (RV) and the output signal (U_{I}) of the current sensor are supplied to influence the pulse duty ratio of the switch
**characterised in that**
the actuation circuit (ASA) has a fixed-frequency astable multivibrator (V121, V130), an output signal of the multivibrator is supplied via a buffer stage (V131) to the input of a controlled current source (V140, V143, R140), and the output of the current source is connected to the control electrode of the switching transistor (V160) in the primary circuit in order to switch on the switching transistor (V160) with a first edge of the multivibrator output signal,
the control electrode of the switching transistor can be connected by a controlled thyristor (V142, V141) to a switch-off potential, wherein the thyristor is supplied as a control signal on the one hand with the setting signal (U_{S*}) and on the other hand with the output signal (U_{I}) of the current sensor (R161), and in each case the second edges of the multivibrator output signal are supplied to the thyristor as a clearing pulse.

2. Switched mode mains power supply according to claim 1, **characterised in that** the multivibrator (V121, V130) is formed asymmetrically.

3. Switched mode mains power supply according to one of claims 1 or 2, **characterised in that** the multivibrator has two transistors (V121, V130), wherein the emitter of one of the transistors (V130) is connected to the base of a transistor (V131) forming the buffer stage.

4. Switched mode mains power supply according to one of claims 1 to 3, **characterised in that** the thyristor is formed from an npn-pnp transistor pair (V142, V141).

5. Switched mode mains power supply according to claim 4, **characterised in that** the setting signal (U_{S*}) and the output signal of the current sensor (R161) is supplied to the emitter of a transistor (V141) of the pair (V142, V141), which is connected by a resistor (R142) to the base of the second transistor (V142) of this pair.

6. Switched mode mains power supply according to any one of claims 1 to 5, **characterised in that** the controlled current source is formed by a transistor (V140), through the collector-emitter path of which a switching current can be supplied to the control electrode of the switching transistor (V160) and from a diode (V143) bridging the base-emitter path of the transistor.

7. Switched mode mains power supply according to any one of claims 4 or 5 and claim 6, **characterised in that** the base of the transistor (V140) of the controlled current source is connected to the emitter (collector) of a transistor (V141) of the transistor pair (V142, V141).

8. Switched mode mains power supply according to any one of claims 1 to 7, **characterised in that** a rectifier diode (V170) and, in series therewith, a protective resistor (R170) leading to a filter capacitor (C170) is connected downstream of the auxiliary winding (W2), wherein the voltage at the connection point of the rectifier diode and the protective resistor forms the supply voltage (U_{FF}) of the multivibrator (V121, V130).

9. Switched mode mains power supply according to any one of claims 1 to 8, **characterised in that** the output voltage of the buffer stage (V131) is limited by a (Zener) diode (V132).

## Revendications

1. Partie de réseau commutée comportant un transformateur (T180), qui comporte un enroulement primaire (W1), un enroulement auxiliaire (W2) et au moins un enroulement secondaire (W3), l'enroulement secondaire étant connecté, en série avec un transistor de commutation (V160), à une tension continue d'entrée (U_{P}), et l'enroulement secondaire et un redresseur (Glᵣ) et un condensateur de charge (C_{L}) étant branchés en aval de l'enroulement secondaire,
comportant un circuit de commande (ASA), pour l'alimentation en courant duquel sont prévus un redresseur auxiliaire (V170) et un condensateur (C170), branchés en aval de l'enroulement auxiliaire, et qui fournit pour l'interrupteur, des impulsions de démarrage à fréquence fixe, et comportant un détecteur de courant (R161) pour le courant traversant l'enroulement primaire (W1), au moins un amplificateur de régulation (RV) pour comparer la tension de sortie (U_{S}) et/ou le courant de sortie (I_{S}) à une valeur de référence réglable (U_{ref}), et dans lequel le signal de sortie du au moins un amplificateur de régulation (RV) ainsi que le signal de sortie (Uₜ) du détecteur de courant étant envoyé en tant que signal de réglage (U_{S}) pour influer sur le taux d'impulsions de l'interrupteur,
**caractérisée en ce que**
le circuit de commande (ASA) possède un multivibrateur astable à fréquence fixe (V121, V130), un signal de sortie du multivibrateur étant envoyé par l'intermédiaire d'un étage de séparation (V131) à l'entrée d'une source de tension commande (V140,V143,R140) et la sortie de la source de courant est reliée à l'électrode de commande du transistor de commutation (V160) dans le circuit primaire de manière à activer le transistor de commutation (V160) avec un premier flanc du signal de sortie du multivibrateur,
l'électrode de commande du transistor de commutation peut être placée à un potentiel de débranchement par l'intermédiaire d'un thyristor commandé (V142,V141), d'une part le signal de réglage (U_{S}') et d'autre part le signal de sortie (Uₗ) du détecteur de courant (R161) étant envoyé en tant que signal de commande au thyristor, et respectivement les seconds flancs du signal de sortie du multivibrateur étant respectivement envoyés en tant qu'impulsions d'extinction au thyristor.

2. Partie de réseau commutée selon la revendication 1, **caractérisée en ce que** le multivibrateur (V121, V130) est agencé de façon dissymétrique.

3. Partie de réseau commutée selon l'une des revendications 1 ou 2, **caractérisée en ce que** le multivibrateur comporte deux transistors (V121, V130), l'émetteur de l'un des transistors (V130). étant relié à la base d'un transistor (V131) formant l'étage de séparation.

4. Partie de réseau commutée selon l'une des revendications 1 à 3, **caractérisée en ce que** le thyristor est formé par une paire de transistors npn-pnp (V142, V141).

5. Partie de réseau commutée selon la revendication 4, **caractérisée en ce que** le signal de réglage (U_{S}') ainsi que le signal de sortie du détecteur de courant (R161) sont envoyés à l'émetteur d'un transistor (V141) de la paire (V142,V141), qui est relié par l'intermédiaire d'une résistance (R142) à la base du second transistor (V142) de cette paire.

6. Partie de réseau commutée selon l'une des revendications 1 à 5, **caractérisée en ce que** la source de courant commandée est formée par un transistor (V140), au moyen de la section collecteur-émetteur duquel un courant de commutation peut être envoyé à l'électrode de commande du transistor (V160), ainsi que par une diode (V53) qui shunte la section base-émetteur du transistor.

7. Partie de réseau commutée selon l'une des revendications 4 ou 5 et 6, **caractérisée en ce que** la base du transistor (V140) de la source de courant commandée est reliée à l'émetteur (collecteur) d'un transistor (V141) de la paire de transistors (V142,V141).

8. Partie de réseau commutée selon l'une des revendications 1 à 7, **caractérisée en ce qu'**en aval de l'enroulement auxiliaire (W2) est branchée une diode de redressement (V170), et en série avec cette dernière, une résistance additionnelle (R170) qui est reliée à un condensateur de charge (C170), la tension au niveau du point de jonction de la diode de redressement et la résistance additionnelle forment la tension d'alimentation (U_{F}) du multivibrateur (V121,V130).

9. Partie de réseau commutée selon l'une des revendications 1 à 8, **caractérisée en ce que** la tension de sortie de l'étage de séparation (V131) est limitée par une diode (Zener) (V132).
